# EUROPEAN PATENT APPLICATION

(11) **EP 3 879 478 A1**
(43) Date of publication of application: **15.09.2021**
(21) Application number: 20162130.7
(22) Date of filing: 10.03.2020
(51) Int. Cl.: G06Q 20/40, G07F 7/08, G06K 9/00, G07F 19/00, G07G 3/00, G07F 7/12

(54) **A METHOD, COMPUTER PROGRAM AND APPARATUS**

(71) Applicant: Mastercard International Incorporated, Purchase, NY 10577 (US)
(72) Inventor: CUMMINS, Oran, Dublin, D16R R97 (IE)
(74) Representative: D Young & Co LLP

(57) **Abstract**

A method is described. This method comprises: receiving a payment request over a network, the payment request including a unique identifier which identifies a payment device making the payment request; comparing the unique identifier with a list of at least one unique identifier, each unique identifier being associated with a payment device meeting a predetermined criterion; and, in the event of a positive comparison; issuing an instruction over the network to capture a characteristic of the person making the payment request.

## Description

### BACKGROUND

### Field of the Disclosure

The present technique relates to a method, computer program and apparatus.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present technique.

With the increase in modern payment techniques such as contactless payments, credit cards, online and smartphone payments and the like, fraud is an ever increasing problem. In particular, so-called "bad actors" who try to carry out fraudulent transactions using stolen cards, copied cards or using card details obtained in a nefarious manner are an increasing problem.

In many instances, financial institutions such as mastercard have developed very sophisticated techniques for identifying fraudulent transactions. These fraudulent transactions are stopped and the payment mechanism (such as a payment card) is cancelled to stop any further transactions from being successful.

Whilst this is very successful, deterrents to reduce the likelihood of a person attempting to perform a fraudulent transaction may reduce the number of attempted fraudulent transactions, which, in turn, will reduce the number of successful fraudulent transactions.

It is an aim of the disclosure to address this issue.

### SUMMARY

According to embodiments of the disclosure, there is provided a method, comprising: receiving a payment request over a network, the payment request including a unique identifier which identifies a payment device making the payment request; comparing the unique identifier with a list of at least one unique identifier, each unique identifier being associated with a payment device meeting a predetermined criterion; and, in the event of a positive comparison; issuing an instruction over the network to capture a characteristic of the person making the payment request.

Other features of the disclosure are described with reference to the accompanying claims.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1: shows a system 100 according to embodiments of the present disclosure;
- Figure 2: shows a system 200 according to embodiments of the present disclosure
- Figure 3: shows a signal flow diagram for the system of Figure 1;
- Figure 4: shows a signal flow diagram for the system of Figure 2;
- Figure 5: shows a schematic diagram of a database storing user information according to embodiments;
- Figure 6: shows a process explaining according to embodiments of the disclosure; and
- Figure 7: shows a process according another embodiment of the disclosure.

### DESCRIPTION OF THE EMBODIMENTS

Referring now to the drawings, wherein like reference numerals designate identical or corresponding parts throughout the several views.

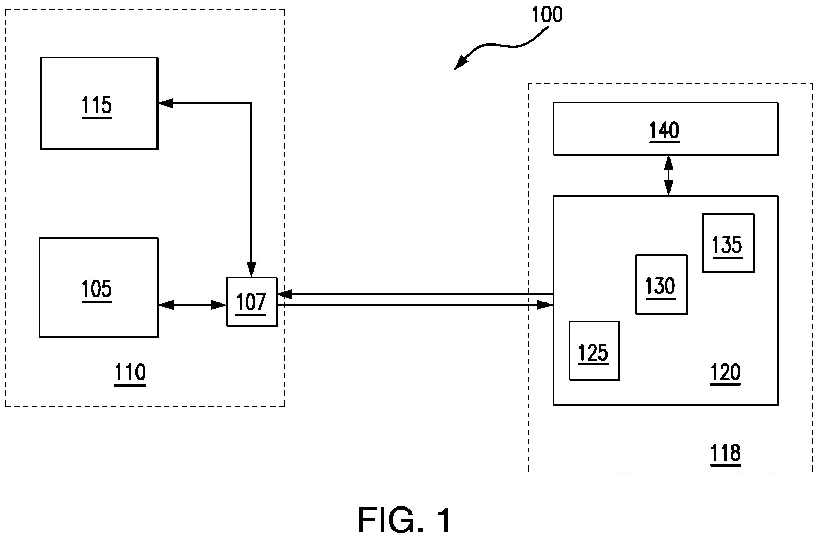

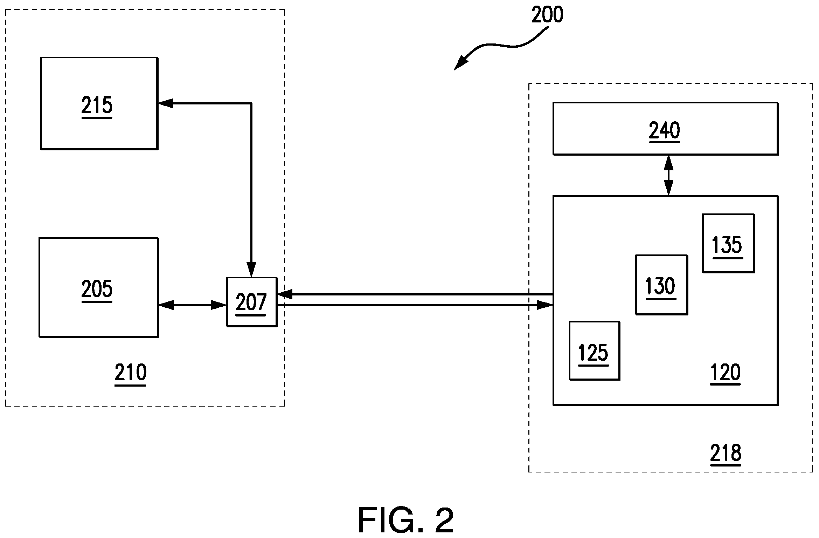

Referring to Figures 1 and 2, payment systems 100 and 200 according to embodiments of the disclosure is shown. Generally, the payment system 100 and 200 of both Figures 1 and 2 respectively, include a merchant 110 and 210 respectively and a financial institution 118. Functionally, the financial institution 118 will include a payment processing network located on one or more server (a single server 120 is shown for brevity) and a fraud detection service 140. In embodiments, the fraud detection service 140 may be integrated into the payment processing network running as an application program on the payment processing network itself or may be provided separately to the payment processing network. In the latter case, the fraud detection service 140 provided separately to the payment processing network will communicate with the payment processing network 120. The financial institution 118 may be the payment processing network such as mastercard, Visa, American Express or the like, or may be a bank or the like.

The merchant 110 in Figure 1 and the merchant 210 in Figure 2 are connected to the financial institution 118 over a network. In embodiments, the merchant 110 in Figure 1 and the merchant 210 in Figure 2 are connected to the server 120.

The server 120 is the same in both Figures 1 and 2.

The server 120 comprises server communication circuitry 125 connected to the network. The server communication circuitry 125 therefore communicates with the merchant 110 over the network. The server 120 also comprises processing circuitry 130. The processing circuitry 130 is solid state circuitry which is embodied as a microprocessor that operates under the control of software. The software is stored on a storage medium 135.

In embodiments, the storage medium 135 is included within server 120, although the disclosure is not so limited and the storage medium may be located remotely to the server 120. In this embodiment, the storage medium 135 is solid state storage, although the disclosure is not so limited and may be optically or magnetically readable storage or the like.

Although the server 120 in Figure 1 and Figure 2 are the same, the merchant 110 in Figure 1 is an on premise merchant, such as a physical shop and the merchant 210 in Figure 2 is an application program for an online merchant who sells products and services over the Internet or using the application program on a smartphone, tablet, computer or the like.

Referring to Figure 1, the merchant 110 includes communication circuitry 107 connected to a network. In embodiments, the network may be the internet, a point-to-point connection, a cellular network (or other wireless network), a Local Area Network or a Virtual Private Network or the like. The purpose of the network is to communicate data from the merchant 110 to the server 120. In the embodiment of Figure 1, the communication circuitry 107 may be provided in a router or the like. The communication circuitry 107 is connected to a Point of Sale terminal 105 and a camera 115. The purpose of the communication circuitry 107 is to route data between the Point of Sale terminal 105, the camera 115 and the network.

In embodiments, the camera 115 is part of a Closed Circuit Television (CCTV) system or other kind of security or surveillance system. However, the disclosure is not so limited and the camera 115 may be located within the Point of Sale terminal 105 itself. The purpose of the camera 115 is to capture an image of a person interacting with the Point of Sale terminal 105 ("the customer"). In this regard, the camera 115 may include optical or digital zoom circuitry that enables the camera 115 to zoom in on the customer. In particular, the camera 115 may zoom in on a particular characteristic of the customer. The characteristic may be the face of the customer, feature of the face of the customer, a tattoo on the person or clothing worn by the customer or the like. More generally, the characteristic of the customer is a feature of the customer that distinguishes them from another person or customer. The feature of the customer may be used to later identify or help prove that an individual was the same individual captured by the camera 115.

It will also be appreciated by the skilled person that although the particular characteristic may be a visual characteristic as in the specific examples noted above, the disclosure is not so limited. In other embodiments, the characteristic may be an audio characteristic (for example, the customer's voice may be recorded), or a biometric characteristic such as a fingerprint.

In embodiments, the Point of Sale terminal 105 is a device that interacts with a payment device presented by the customer. The Point of Sale terminal 105 includes processing circuitry that operates under the instruction of computer software to perform embodiments of the disclosure.

The payment device may be a credit card or debit card or any kind of payment method that allows a customer to purchase a good or service from the merchant. The payment device contains a unique identifier that is associated with the payment device. In some instances, the unique payment identifier is a Permanent Account Number (or PAN) which, in embodiments, complies with part 1 of the ISO7812 Standard, or may be a bank account number and sort-code. However, the disclosure is not so limited and any unique identifier associated with the payment device is envisaged. The Point of Sale terminal 105A may be, for example, a credit card reader such as an Ingenico ® iWL220 or an iZettle Card Reader or the like. Of course, the disclosure is not so limited and the Point of Sale terminal 105 may be any kind of device that takes payment for goods or services. The Point of Sale terminal 105 may be directly connected to the communication circuitry 107 using a wireless connection or may connect to the communication circuitry 107 using a till or via a smartphone or the like.

When a customer wishes to make a purchase, the customer presents the payment device to the Point of Sale terminal 105. The Point of Sale terminal 105 generates a payment request in a known manner that includes the unique identifier associated with the payment device (such as the PAN). The payment request is sent to the financial institution 118 over the network via the communication circuitry 107. The payment request will, in embodiments, be encrypted. The payment request may be sent to the fraud detection service 140 within the financial institution or the payment processing network 120 within the financial institution 118.

Referring to Figure 2, an online merchant provides an application located on a merchant device 210 such as a cellular phone, tablet, computer or other device. The application may be a standalone application or may be part of a website. In embodiments, therefore, the merchant device 210 in Figure 2 includes communication circuitry 207, which communicates with the financial institution 218 over a network such as the Internet or a cellular network or the like.

Additionally, a camera 215 is provided. Similarly to Figure 1, the purpose of the camera 215 is to capture an image of the customer interacting with the merchant device 210. Similar to embodiments of Figure 1, the camera 215 of Figure 2 may include optical or digital zoom circuitry that enables the camera 215 to zoom in on the customer. In particular, the camera 215 may zoom in on a particular characteristic of the customer. Similar to Figure 1, the characteristic may be the face of the customer, feature of the face of the customer, a tattoo on the person or clothing worn by the customer or the like. More generally, the characteristic of the customer is a feature of the customer that distinguishes them from another person or customer. The feature of the customer may be used to later identify or help prove that an individual was the same individual captured by the camera 215.

Like Figure 1, it will also be appreciated by the skilled person that although the particular characteristic may be a visual characteristic as in the specific examples noted above, the disclosure is not so limited. In other embodiments, the characteristic may be an audio characteristic (for example, the customer's voice may be recorded), or a biometric characteristic.

The merchant device 210 includes processing circuitry 205 which runs the application. The application is software code stored within a storage medium located within the processing circuitry 205.

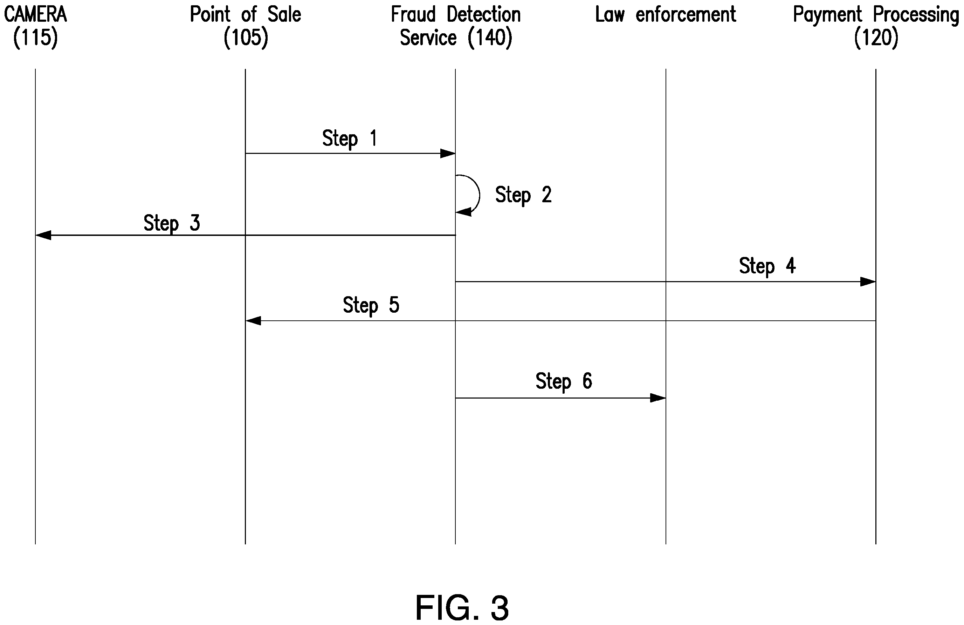

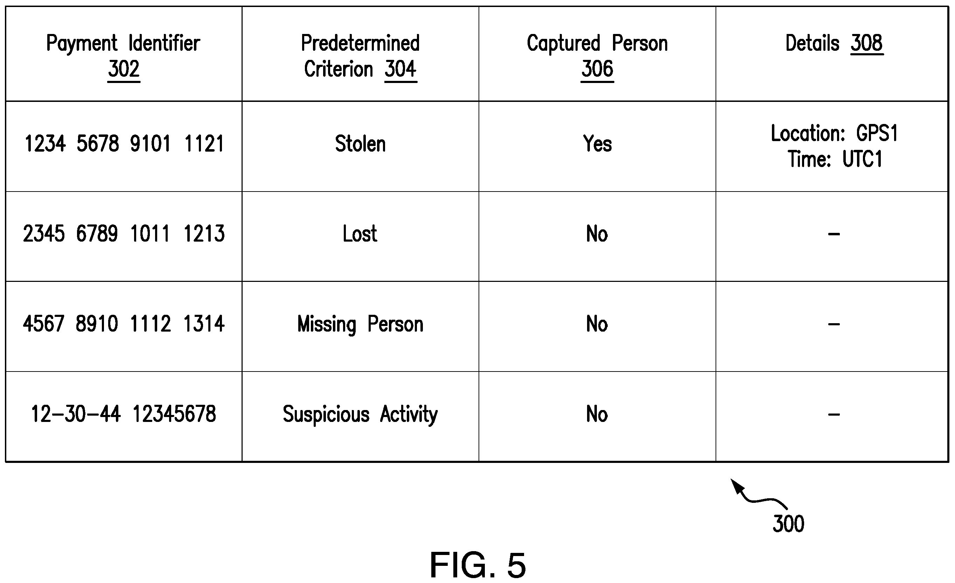

As will be explained with reference to Figure 3 later, the fraud detection service 140 in Figure 1 and 240 in Figure 2 compares the unique payment identifier associated with the payment device with a database (such as that described with reference to Figure 5) that includes payment devices meeting a predetermined criterion. In embodiments, the predetermined criterion includes payment devices that have been compromised. As known in the art, a compromised payment device is a payment device that has been lost or stolen or has had suspicious purchasing attempted or carried out. However, as will be explained, the disclosure is not so limited and the predetermined criterion may include confirming the welfare of the user of the payment device.

In the event of a positive comparison, the fraud detection service 140 will send an instruction to the camera 115 of Figure 1 or camera 215 of Figure 2 to capture a characteristic (such as the customer's face or the like) that distinguishes the customer attempting to make the purchase from other customers. This instruction may include an instruction to zoom in on the characteristic, send the captured characteristic to the fraud detection service or the like.

Figure 3 shows a signal diagram for the payment system 100 of Figure 1.

In step 1, in response to the customer presenting a payment device, the Point of Sale terminal 105 sends a payment request to the financial institution 118.

In step 2, the financial institution 118 will check the unique payment identifier within the payment request using the fraud detection service 140 which is provided either as a separate service to the payment processing network 120 or as part of the payment processing network 120. Specifically, the fraud detection service 140 will check the payment identifier against a database that is described in reference to Figure 5. The check determines whether the payment device is compromised.

In the event that the payment device has not been marked as compromised, the payment request is passed to the payment processing network 120 to proceed with the known approval process for the transaction. This approval process is not shown for brevity.

However, in the event that the payment device has been marked as compromised, the process moves to step 3. In step 3, the fraud detection service 140 sends an instruction to the camera 115 within the merchant 100. This instruction is made via the communication circuitry 107. The instruction may therefore be provided by either the fraud detection service 140 or the communication circuitry 107. The instruction instructs the camera 115 to capture a characteristic of the customer stood near the Point of Sale terminal 105 who presented the payment device.

The instruction may request that the camera 115 capture specific characteristics of the customer, such as the face of the customer. In addition, or alternatively, the instruction may request that the camera 115 captures audio or biometric data associated with the customer. In response to this instruction, the camera 115 may perform object recognition on the captured images to capture the characteristic of the customer. This may include facial recognition to capture the user's face. Further, the camera 115 may perform digital or optical zooming on the characteristic of the user such as the face of the customer to capture a clearer image of the customer. This improves the quality of the captured facial image which assists in identifying the customer presenting the compromised payment device which aids later detection of the customer.

In many instances, a plurality of cameras is located in a merchant. Where a plurality of camera is located in a merchant, the fraud detection service 140 may notify each of the plurality of cameras separately. Of course, the disclosure is not so limited and the communication circuitry 107 may send the instruction to each of the cameras within the merchant 100.

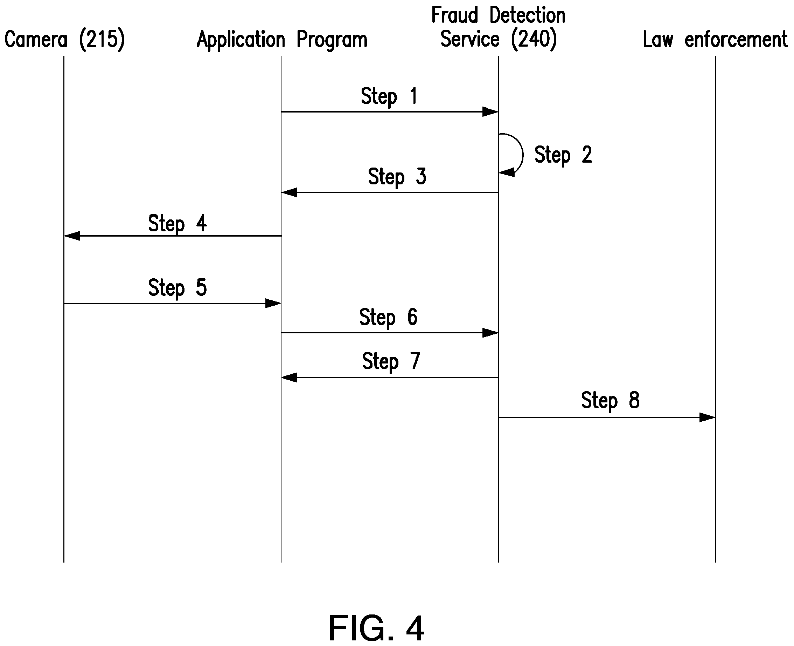

The process then moves to step 4 where the fraud detection service 140 sends a response to the payment processing system 120 indicating that the payment device is compromised. The process moves to step 5 wherein the payment processing system 120 sends a response to the Point of Sale device 105 indicating that the payment request is declined. The response may indicate to the Point of Sale device 105 that the payment request is declined due to the payment device being compromised. This may allow the merchant to perform various steps to restrict the customer from leaving their premises or to contact internal security, the police or the like. In embodiments, the fraud detection service 140 may separately contact the internal security within the merchant or the police during step 4. However, this is not specifically shown in Figure 4 for brevity.

The process then moves to step 5 where the camera 115 provides the captured media to the fraud detection service 140. The captured media may be provided with other information such as the location of the camera 115 which may be Global Positioning System (GPS) co-ordinates or the like, a Universal Time Code identifying the time period over which the media was captured or any other pertinent information. It should be noted that the captured media presented to the fraud detection service 140 may include media captured prior to the issuance of the instruction to the camera 105 by the fraud detection service 140. This captured media may include media captured by the camera a predetermined period before the issuance of the instruction, or may include media from other cameras located within the merchant containing the face of the customer (for example, media of the customer entering or leaving the premises). In embodiments, only the characteristic of the customer may be provided. This will reduce the amount of data sent over the network and will reduce storage requirements within the fraud detection service 140. For example, the zoomed image of customer's face may be provided.

It will be noted that the instruction sent to the camera 105 issued by the fraud detection service 140 is sent prior to the response to the payment processing system 120. Whilst this is not necessary, by sending the instruction prior to the response to the payment processing system 120, this allows the camera 105 to capture the characteristic or characteristics of the customer presenting the compromised payment device before the payment is declined. This increases the likelihood that the characteristic of characteristics will be captured because after the payment request is declined, the customer may alter his or her behaviour or may hide their face from view to avoid being captured.

The process then moves to step 6, where the fraud detection service 140 provides the captured characteristic of the user, and other relevant information such as the location of the attempted purchase, to the police or other law enforcement.

In embodiments, the captured characteristic may be provided to other local merchants who are part of the fraud detection service. This means that if the customer who attempted to make the fraudulent purchase enters the premises of other local merchants, the other local merchants will be aware that the customer has attempted to make a purchase using a compromised payment device. The provision of the captured characteristics to other local merchants may be via a merchant's association or the like.

Figure 4 shows a signal diagram for the payment system 200 of Figure 2.

In step 1, and in response to a customer wishing to purchase a good or service in an online merchant, the application program running on the processing circuitry 205 sends the payment request to the fraud detection service 240.

The process moves to step 2 where in a similar manner to step 2 of Figure 3, the fraud detection service 240 checks the payment identifier against a database that is described in reference to Figure 5. The check determines whether the payment device is compromised.

The process moves to step 3 where the fraud detection service 240 issues a reply to the application program running on the processing circuitry 205. In the event that the payment device is not compromised, the application program will then issue the payment request to the payment processing network 120 as is known.

However, in the event that the fraud detection service 240 determines that the payment device is compromised, the application program will issue an instruction to the camera 215 located within the merchant terminal 200 to capture the customer. In order to activate the camera 215, the application program will require the permission of the user to access the camera 215. This permission may be obtained when the application is initially installed. Alternatively, the permission may be obtained in response to a specific request made by the application when receiving the instruction and prior to issuing the instruction to the camera 215. It should be noted that if the permission is obtained when the application is initially installed, the user of the merchant device 200 may remove permission at any time.

The process moves to step 4 where the application program instructs the camera 215 to capture specific characteristics of the customer, such as the face of the customer. In addition, or alternatively, the instruction may request that the camera 215 captures audio or biometric data associated with the customer. In response to this instruction, the camera 215 may perform objection recognition on the captured images to capture the characteristic of the customer. For example, the camera may perform facial recognition on the capture images to capture the customer's face. Further, the camera 215 may perform digital or optical zooming on the characteristic of the user such as the face of the customer to capture a clearer image of the customer. This improves the quality of the captured facial image which assists in identifying the customer presenting the compromised payment device which aids later detection of the customer.

The process moves to step 5 where the captured characteristics of the customer are provided to the application program running on the processing circuitry 205.

The process moves to step 6 where the content and other pertinent information such as the location of the merchant terminal obtained from GPS circuitry (not shown) located within the merchant terminal 200 and/or a Universal Time Code for the time of the payment request is provided by the application program to the fraud detection service 240.

The process moves to step 7 where the fraud detection service 240 notifies the application program that the payment request is declined. It should be noted here that the notification provided to the application program that the payment has been declined is provided after the captured content and other pertinent information is provided to the fraud detection service 240. Whilst this is not necessary, it is advantageous to provide the content and pertinent information before the application program is notified that the payment request has been declined because the customer attempting to use the compromised payment device may switch off or destroy the merchant device 200 before the content is uploaded to the fraud service 240 if the customer knew that their payment was declined due to the use of a compromised payment device.

The process moves to step 8 where the fraud detection service 240 notifies the police or other law enforcement agency of the attempted use of a compromised payment device.

With regard to step 1 of Figures 3 and 4, although this shows the point of sale terminal in Figure 3 and the application program of Figure 4 sending the payment request to the Fraud Detection Service directly, the disclosure is not so limited. In embodiments, the point of sale terminal in Figure 3 and the application program of Figure 4 may send the payment request to the payment processing network. The payment processing network may then forward the payment request to the Fraud Detection Service. The Fraud Detection Service may then perform the checks of step 2 shown in Figures 3 and 4 on the payment identifier forwarded from the payment processing network against the database that is described in reference to Figure 5. The process will continue as described in Figures 3 and 4. This arrangement is advantageous as the point of sale terminal shown in Figure 3 and the application program of Figure 4 will not require any change to its current operation.

Referring to Figure 5, a database 300 is shown. The database 300 is the database which is used by the fraud detection system 140 of Figure 3 and the fraud detection system 240 of Figure 4 to identify whether a payment device is compromised. Specifically, the database 300 includes a list of unique payment identifiers in column 302. Each of the payment identifiers in column 302 is associated with a payment device. Additionally, a predetermined criterion column 304 is provided.

Although the aforesaid description describes a payment device as being compromised, which may include the payment device being lost, stolen or having had suspicious activity take place, the disclosure of predetermined criterion is not so limited. In some instances, where the welfare of the registered user of the payment device is of concern, confirmation that the payment device is being used by the registered user may be useful. For example, in the case of the registered user going missing, the use of the payment device will confirm that the registered user is safe. In the instance that the payment device is being used by the registered user, the payment will not be declined.

Referring back to Figure 5, column 306 indicates whether the payment device has been used or attempted to be used. In the event that the compromised payment device has been used to make an attempted purchase, at least one characteristic of the customer attempting to make the purchase is captured. In this case, payment device with the unique payment identifier 1234 5678 910 1121 has been used to make an attempted purchase. Accordingly, it is noted in the database 300 that the capture of the characteristic of the person with the payment request is associated with the payment identifier. In other words, one or more characteristic of the person attempting to make the purchase has been captured and this is indicated in the database 300.

Column 308 also indicates in association with each payment identifier for which an attempted purchase has been made, the location and time of that attempted purchase. This is provided to the fraud detection service 140 or 240 as pertinent information as explained above. This information is used to assist in identifying the person making the attempted purchase.

Of course, this pertinent information may not be stored or only part of the pertinent information may be stored. For example, if the predetermined criterion is a "Missing Person", it may not be appropriate to store the location of the attempted purchase, but it may be appropriate to store the time at which the attempted purchase was made.

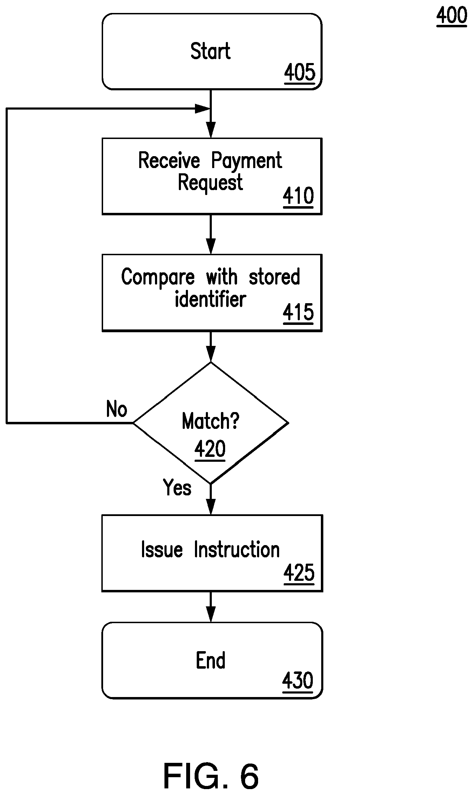

Figure 6 shows a flow chart describing the basic operation of the fraud detection service 140 and 240 within the financial institution 118 and 218. The process 400 starts at step 405. The process moves to step 410 where a payment request is received from either the Point of Sale terminal 105 or the application program being run on the processing circuitry 205. The process moves to step 415 where the unique identifier associated with the payment device is compared with payment identifier in column 302 of the database 300. In other words, a check is made to see if the payment device used by the customer to make an attempted purchase has been compromised. The process then moves to step 420 where the results of the comparison are determined.

In the event of no-match, the no path is followed and the process returns to step 410. However, in the event of a match, the yes path is followed to step 425 where an instruction is issued to the camera 115 or the application run on the processing circuitry 205 to capture the customer attempting to make the purchase. The process then ends at step 430.

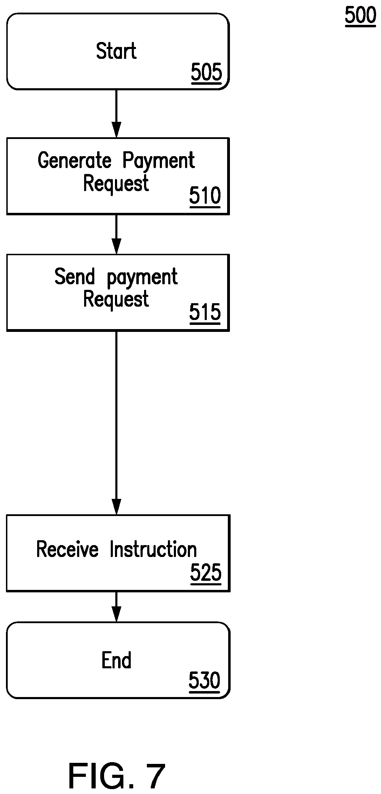

Figure 7 shows a flow chart describing the basic operation of the merchant 110 and 210. The process 500 starts at step 505. The process moves onto step 510 where a payment request is generated. The payment request includes the payment identifier that uniquely identifies the payment device attempting to make a purchase. The process moves to step 515 where the payment request is sent to the financial institution 118 and specifically the fraud detection service 140 and 240 within the financial institution 118.

The process then moves to step 525 where an instruction is received from the fraud detection service 140 and 240 within the financial institution 118 and 218. This instruction is to capture a characteristic of the person attempting to make a purchase using a compromised payment device. The process then moves to step 530 where the process ends.

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

Embodiments of the present technique can generally described by the following numbered clauses:
1. A method, comprising:
   receiving a payment request over a network, the payment request including a unique identifier which identifies a payment device making the payment request;
   comparing the unique identifier with a list of at least one unique identifier, each unique identifier being associated with a payment device meeting a predetermined criterion; and, in the event of a positive comparison;
   issuing an instruction over the network to capture a characteristic of the person making the payment request.
2. A method according to clause 1, wherein the predetermined criterion is the payment device has been lost or stolen.
3. A method according either clause 1 or 2, wherein the instruction is to a camera to capture an image of the person making the payment request.
4. A method according to clause 3 further comprising:
   receiving the captured image of the person making the payment request.
5. A method according to clause 4, further comprising:
   sending the received captured image to law enforcement.
6. A method according to any preceding clause, further comprising:
   associating the capture of the person with the payment request.
7. A method, comprising:
   generating a payment request, the payment request including a unique identifier which identifies a payment device making the payment request;
   sending the payment request over a network;
   receiving an instruction over the network to capture a characteristic of the person making the payment request.
8. A method according to clause 7, wherein in response to receiving the instruction, the method comprises capturing an image of the person making the payment request.
9. A method according to clause 8, wherein prior to capturing the image of the person making the payment request, the method comprises: performing object recognition on the image to identify a characteristic of the person;
   zooming in on the characteristic; and
   capturing an image of the characteristic.
10. A method according to clause 9, wherein the characteristic is the face of the person.
11. A computer program containing computer readable instructions which, when loaded onto a computer, configure the computer to perform a method according to any one of clauses 1 to 10.
12. A storage medium configured to store the computer program of clause 11 therein or thereon.
13. An apparatus comprising processing circuitry configured to:
   receive a payment request over a network, the payment request including a unique identifier which identifies a payment device making the payment request;
   compare the unique identifier with a list of at least one unique identifier, each unique identifier being associated with a payment device meeting a predetermined criterion; and, in the event of a positive comparison;
   issue an instruction over the network to capture a characteristic of the person making the payment request.
14. An apparatus comprising processing circuitry configured to:
   generate a payment request, the payment request including a unique identifier which identifies a payment device making the payment request;
   send the payment request over a network;
   receive an instruction over the network to capture a characteristic of the person making the payment request.
15. An apparatus according to clause 14, comprising communication circuitry configured to communicate over a cellular network.

## Claims

1. A method, comprising:
receiving a payment request over a network, the payment request including a unique identifier which identifies a payment device making the payment request;
comparing the unique identifier with a list of at least one unique identifier, each unique identifier being associated with a payment device meeting a predetermined criterion; and, in the event of a positive comparison;
issuing an instruction over the network to capture a characteristic of the person making the payment request.

2. A method according to claim 1, wherein the predetermined criterion is the payment device has been lost or stolen.

3. A method according either claim 1 or 2, wherein the instruction is to a camera to capture an image of the person making the payment request.

4. A method according to claim 3 further comprising:
receiving the captured image of the person making the payment request.

5. A method according to claim 4, further comprising:
sending the received captured image to law enforcement.

6. A method according to any preceding claim, further comprising:
associating the capture of the person with the payment request.

7. A method, comprising:
generating a payment request, the payment request including a unique identifier which identifies a payment device making the payment request;
sending the payment request over a network;
receiving an instruction over the network to capture a characteristic of the person making the payment request.

8. A method according to claim 7, wherein in response to receiving the instruction, the method comprises capturing an image of the person making the payment request.

9. A method according to claim 8, wherein prior to capturing the image of the person making the payment request, the method comprises: performing object recognition on the image to identify a characteristic of the person;
zooming in on the characteristic; and
capturing an image of the characteristic.

10. A method according to claim 9, wherein the characteristic is the face of the person.

11. A computer program containing computer readable instructions which, when loaded onto a computer, configure the computer to perform a method according to any one of claims 1 to 10.

12. A storage medium configured to store the computer program of claim 11 therein or thereon.

13. An apparatus comprising processing circuitry configured to:
receive a payment request over a network, the payment request including a unique identifier which identifies a payment device making the payment request;
compare the unique identifier with a list of at least one unique identifier, each unique identifier being associated with a payment device meeting a predetermined criterion; and, in the event of a positive comparison;
issue an instruction over the network to capture a characteristic of the person making the payment request.

14. An apparatus comprising processing circuitry configured to:
generate a payment request, the payment request including a unique identifier which identifies a payment device making the payment request;
send the payment request over a network;
receive an instruction over the network to capture a characteristic of the person making the payment request.

15. An apparatus according to claim 14, comprising communication circuitry configured to communicate over a cellular network.
